# EUROPEAN PATENT APPLICATION

(11) **EP 4 265 313 A1**
(43) Date of publication of application: **25.10.2023**
(21) Application number: 22169544.8
(22) Date of filing: 22.04.2022
(51) Int. Cl.: B01D 29/11, B01D 46/24

(54) **SECURE FILTER ELEMENT AND FILTER ASSEMBLY**

(71) Applicant: Donaldson Company, Inc., Bloomington, MN 55431 (US)
(72) Inventor: CATOOR, Bart, Minneapolis, 55440-1299 (US); VAN DE POEL, Günther, Minneapolis, 55440-1299 (US); VERSTRAETE, Mathijs, Minneapolis, 55440-1299 (US)
(74) Representative: IPLodge bv

(57) **Abstract**

The present disclosure relates to a filter element comprising a filter medium pack elongating along a longitudinal axis, a seal and a supporting structure supporting the seal. The seal comprises at least a first segment and a second segment adjoining the first segment, and wherein at least a portion of the second segment is axially separated from the first segment. The filter medium pack further comprises a coupling arrangement for engaging with a complementary coupling arrangement of the housing of the filter system, and wherein the supporting structure comprises a first circumferential radial surface and a second circumferential radial surface circumscribing the longitudinal axis, and wherein the coupling arrangement of the filter element is disposed on said first circumferential radial surface and wherein the seal is disposed on the second circumferential radial surface .

## Description

### FIELD OF THE DISCLOSURE

The present disclosure generally relates to filter elements for filtering a fluid and to filter assemblies comprising a filter element and a housing receiving the filter element. More precisely, the disclosure relates to filter elements that are removably insertable in the housing of the filter system.

### BACKGROUND

Filter elements for filtering a fluid, also referred to as filter cartridges, are used for a wide variety of filtering applications. The fluid can be a liquid or a gas including, for example, air.

The filter element is generally an element that is to be removed and replaced from a housing of the filter system at regular time intervals or when the filtering performance has dropped below a critical threshold level.

Typically, the filter element comprises a filter medium pack including filter media for removing contaminant materials when the fluid flows through the filter media. Commonly used and commercially available filter media are for example pleated media or fluted media. The fluted media are also referred to as Z-filter media.

Besides the filter medium pack, the filter element also comprises a seal for sealing against an inner wall of a housing of a filter system such that the fluid to be filtered cannot bypass the filter medium pack.

More advanced filter assemblies, for example air filter assemblies for vehicles, comprise two filter elements, a primary filter element, also named main filter element, and a secondary filter element, also named safety filter element.

The safety filter element backs up the main filter element and thereby protects for example the engine of a vehicle while the primary filter is out of the housing during service.

The safety filter element also protects the engine against hidden damage to the primary filter element, e.g. damage from cleaning, or against a malfunction of the primary filter element, e.g. due to mis-installation or due to installation of the wrong size primary filter element.

The lifetime of the safety seal element is generally much longer than the lifetime of the main filter element, for example two to four times longer, and hence the replacements intervals for the primary and the secondary filter element are different. When for example replacing the main filter element it is important to maintain the safety filter element in place in order to protect the engine from dust or other materials that could damage the engine during maintenance operations.

In general, when performing maintenance operations, it is important that the new filter elements are correctly installed, e.g. the orientation, and secured within the housing of the filter system. There is also a further need to provide filter elements and components that can be assembled in a straightforward and fast way, thereby facilitating the maintenance operations.

Hence, there is room for improving filter elements that at the same time facilitate maintenance procedures and guarantee a secure and correct installation of the filter element within a housing of a filter system.

### SUMMARY

It is an object of the present disclosure to provide a filter element for filtering fluids that guarantees a fast and secure installation of the filter element within a housing of a filter system and wherein serviceability of the filter element is improved.

The present disclosure is defined in the appended independent claims. The dependent claims define advantageous embodiments.

According to a first aspect of the present disclosure, a filter element for insertion into a housing of a filter system is disclosed. In embodiments, the filter element is for example a filter element for air cleaning.

The filter element comprises a filter medium pack for filtering a fluid, a seal for avoiding the fluid from bypassing the filter medium pack when the filter element is installed in the filter system, and a supporting structure supporting the seal. The filter medium pack comprises a circumferential radial side elongating along a longitudinal axis from a first axial end to a second axial end opposite the first axial end. The filter element is characterized in that the seal comprises at least a first segment and a second segment adjoining the first segment, and wherein at least a portion of the second segment is axially separated from the first segment. The filter element is further characterized in that it comprises a coupling arrangement for interacting with a complementary coupling arrangement located inside the housing of the filter system. The supporting structure for supporting the seal comprises a first and a second circumferential radial surface circumscribing the longitudinal axis, and wherein the coupling arrangement of the filter element is disposed on the first circumferential radial surface and wherein the seal is disposed on the second circumferential radial surface.

When the word "axially" or "axially separated" is used, it is to be construed as with respect to the longitudinal axis. For example a separation as measured along the longitudinal axis.

Advantageously, a supporting structure supporting at the same time the seal and the coupling arrangement, allows for providing a secure sealing between the filter element and the housing of the filter system. The seal with deviating seal segments allows for instance to avoid features on an inner surface of the housing, e.g. ribs, grooves, or recesses, that would otherwise prevent a regular planar seal from sealing the space between the filter element and the inner surface of the housing. The coupling arrangement additionally provides for an uniform and reproducible pressure distribution on the seal, i.e. on each of the segments of the seal.

Further, by combining a coupling arrangement with a seal having at least one seal segment axially separated from an adjoining seal segment, serviceability of the filter element is increased. Indeed, due to axial separation of seal segments, when inserting the filter element in the housing and performing for instance a rotational motion with the filter element, the seal will only be compressed, or bended in case of a lip seal, in a gradual way. When inserting the filter element and starting the rotation, only one or a limited number of segments, e.g. the second segments, are compressed or bended and only when further rotating and reaching the final sealing position, all segments, i.e. the first and second segments, are to be pressed or bended. This gradual compression of the seal allows for a smooth installation of the filter element in the housing of the filter system.

By using a seal with axially separated segments, sensors can advantageously be installed in a close geometry with respect to the seal, which allows for adequately monitoring a pressure difference between an entrance side and an output side of the filter element.

Advantageously, by providing a seal comprising at least a first segment and a deviating second segment, only a limited number of orientations are possible to install the filter element in its sealing position. This allows for reinstalling a filter element in reproducible way.

In embodiments, the seal is a lip seal comprising at least one circumferential seal lip.

The lip seal can advantageously be used in combination with the coupling arrangement. Indeed, the use of a lip seal having second segments axially extending away from first segments, facilitates the performance of a roto-translational motion with the filter element during installation of the filter element in a housing of the filter system as the flexibility of the seal lips allows the lip seal to temporarily and adequately be bended inwardly during the rotational motion. The amount of bending required during the rotational motion can vary and depends on the geometry of the sealing surface of the housing, which for instance has a surface profile adapted to match with the segment geometry of the seal and adapted to avoid installation of a wrong filter element.

Advantageously, with a lip seal, when the filter element is installed in a housing of filter system, the higher the under pressure, the stronger the lip seal is seated in its sealing position and hence the stronger the sealing effect.

According to a second aspect of the invention a filter assembly comprising a filter element and a housing enclosing the filter element is provided.

The housing comprises a tubular frame structure located inside the housing and the tubular frame structure has a first circumferential wall. A coupling arrangement that is complementary to the coupling arrangement of the filter element is disposed to the first circumferential wall of the tubular frame structure. The housing further comprises a second circumferential wall forming a sealing surface configured for receiving the seal of the filter element.

### SHORT DESCRIPTION OF THE DRAWINGS

These and further aspects of the present disclosure will be explained in greater detail by way of example and with reference to the accompanying drawings in which:
Fig.1a and Fig.1b are schematic perspective views of an embodiment of a filter element according to the present disclosure illustrating respectively a first and a second end of the filter element,
Fig.1c is a schematic side view of the filter element shown in Fig.1a,
Fig.1d is a schematic cross-sectional view of the filter element shown in Fig.1a, wherein the cross-section is taken through a plane A-A shown on Fig.1c,
Fig.1e is a schematic top view of the filter element shown on Fig.1a,
Fig.2a to Fig.2c are schematic cross-sectional views illustration an insertion of the filter element shown on Fig.1a into a housing of a filter system by performing a roto-translation movement with the filter element,
Fig.3a to Fig.3h schematically illustrate embodiments of a seal according to the present disclosure comprising one first segment and one second segment,
Fig.4a to Fig.4c schematically illustrate embodiments of a seal according to the present disclosure comprising two first segments and two second segments,
Fig.5 schematically illustrates a portion of a filter medium pack and a seal comprising a first and a second segment,
Fig.6a is a schematic perspective view of an embodiment of a lip seal of a filter element according to the present disclosure,
Fig.6b is a schematic side view of the seal shown in Fig.6a,
Fig.6c is a schematic cross-sectional view of the seal shown in Fig.6a, wherein the cross-section is taken along the plane B-B shown on Fig.6b,
Fig.7a to Fig.7h are schematic cross-sectional views of embodiments of filter elements according to the present disclosure wherein the filter medium pack comprises an inner cavity,
Fig.8a to Fig.8c are schematic cross-sectional views of embodiments of filter elements according to the present disclosure wherein the filter medium pack is a straight-through filter medium pack,
Fig.9 is a schematic perspective view of a portion of an embodiment of a housing of a filter system.

### DETAILED DESCRIPTION

The present disclosure will be described in terms of specific embodiments, which are illustrative of the disclosure and not to be construed as limiting. It will be appreciated by persons skilled in the art that the present disclosure is not limited by what has been particularly shown and/or described and that alternatives or modified embodiments could be developed in the light of the overall teaching of this disclosure. The drawings described are only schematic and are non-limiting.

Use of the verb "to comprise", as well as the respective conjugations, does not exclude the presence of elements other than those stated. Use of the article "a", "an" or "the" preceding an element does not exclude the presence of a plurality of such elements.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the disclosure described herein are capable of operation in other sequences than described or illustrated herein.

Reference throughout this specification to "one embodiment" or "an embodiment" means that a particular feature, structure or characteristic described in connection with the embodiments is included in one or more embodiment of the present disclosure. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one ordinary skill in the art from this disclosure, in one or more embodiments.

The words "preferred" and "preferably" refer to embodiments of the invention that may afford certain benefits, under certain circumstances. However, other embodiments may also be preferred, under the same or other circumstances. Furthermore, the recitation of one or more preferred embodiments does not imply that other embodiments are not useful and is not intended to exclude other embodiments from the scope of the invention.

### Filter element

A filter element for filtering a fluid is a serviceable component, i.e. a component that can be removed and replaced from a housing of a filter system. The filter element can for example be an air filter element for cleaning airflow streams for motorized vehicles or any other filter system wherein airflows are to be cleaned.

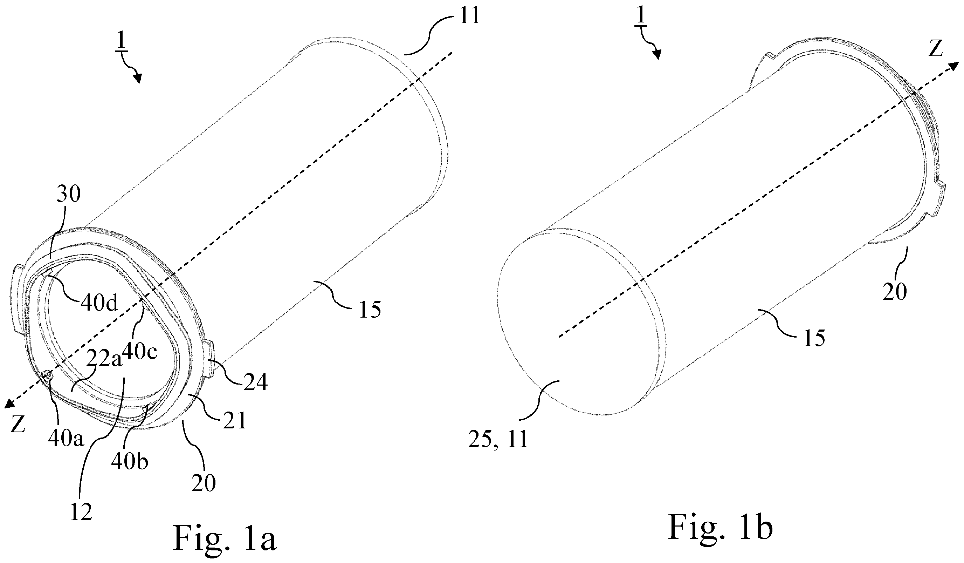

With reference to Fig.1a to Fig.1e, Fig.7a to Fig.7h, and Fig.8a to Fig.8c, various views of examples of embodiments of filter elements according to the present disclosure are shown. Those filter elements 1 can be construed as either main filter elements, i.e. a primary filter element, or as safety filter elements, i.e. secondary filter elements, for backing up a main filter element.

The filter element 1 comprises a filter medium pack 10 for filtering a fluid, a seal 30 for avoiding the fluid from bypassing the filter medium pack when the filter element is installed in the filter system and a supporting structure 20 supporting the seal 30.

In embodiments, the supporting structure 20 is sealingly attached to the filter medium pack 10. For example, this attachment between the supporting structure 20 and filter medium pack 10 can be made by a glue or by thermal welding or by any other suitable means.

The filter element according to the present disclosure is characterized in that the seal 30 comprises at least a first segment S1 and a second segment S2 adjoining the first segment S1, and wherein at least a portion PS2 of the second segment S2 is axially separated from the first segment S1.

The second segment S2 can also be named deviating segment as the second segment is axially deviating away from the first segment.

Axially has to be construed as with respect to the longitudinal axis Z. Hence, axially separated has to be construed as a separation along the longitudinal axis Z.

A portion PS2 of the second segment S2 that is axially separated from the first segment S1 implies that the portion PS2 of the second segment is disposed at a different axial position when compared to the axial position of the first segment S1.

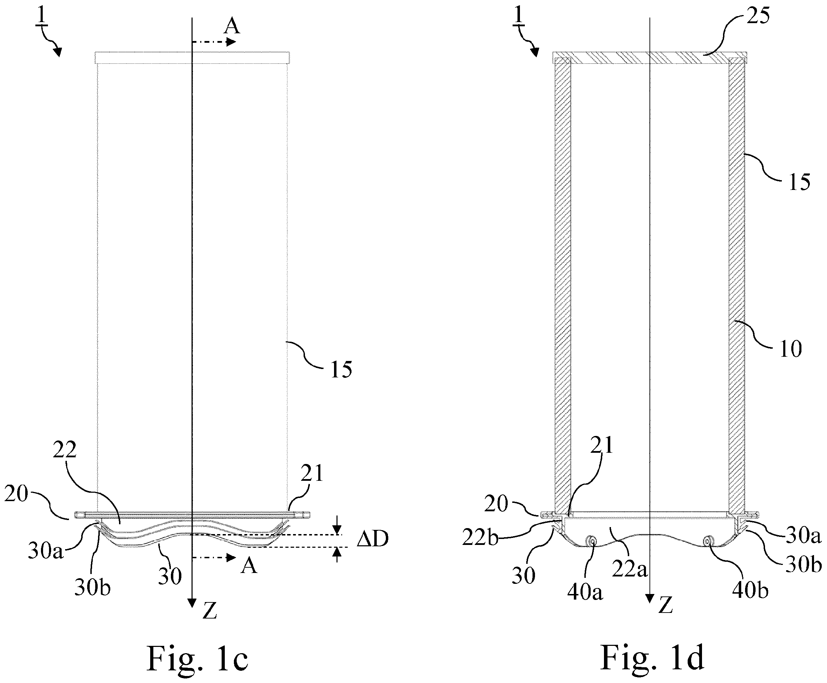

In other words, there is at least a portion SP2 of the second segment S2 that is separated from the first segment S1 by a non-zero axial separation distance ΔD measured along the longitudinal axis Z. The cross-sectional views of filter elements shown on Fig.1c, Fig.5, Fig.7a to Fig.7h and Fig.8a to Fig.8c schematically indicate this non-zero axial separation distance ΔD between a first and a second segment of the seal 30.

By use of the term "segment", it is simply meant to indicate a portion of the seal without regard to the overall shape of the seal. Nor does it require that the portion of the second segment axially separated from the first segment be entirely linear, planar, curved, or particularly shaped unless otherwise further specified. Detailed examples of embodiments of seals having different shapes are further discussed below.

The fact that there is a non-zero axial separation distance ΔD between the first segment S1 and a portion of the second segment S2, does not exclude that, in embodiments, there can also be an additional non-zero separation distance measured in a direction perpendicular to the longitudinal axis Z between the first segment S1 and the same portion or another portion of the second segment S2. In other words, in embodiments, the second segment can be separated away from the first segment both in the axial direction, i.e. parallel with the longitudinal axis Z, and in the radial direction, i.e. perpendicular to the longitudinal axis Z.

The filter element according to the present disclosure is further characterized in that the filter element 1 comprises a coupling arrangement for engaging with a complementary coupling arrangement of the housing of the filter system.

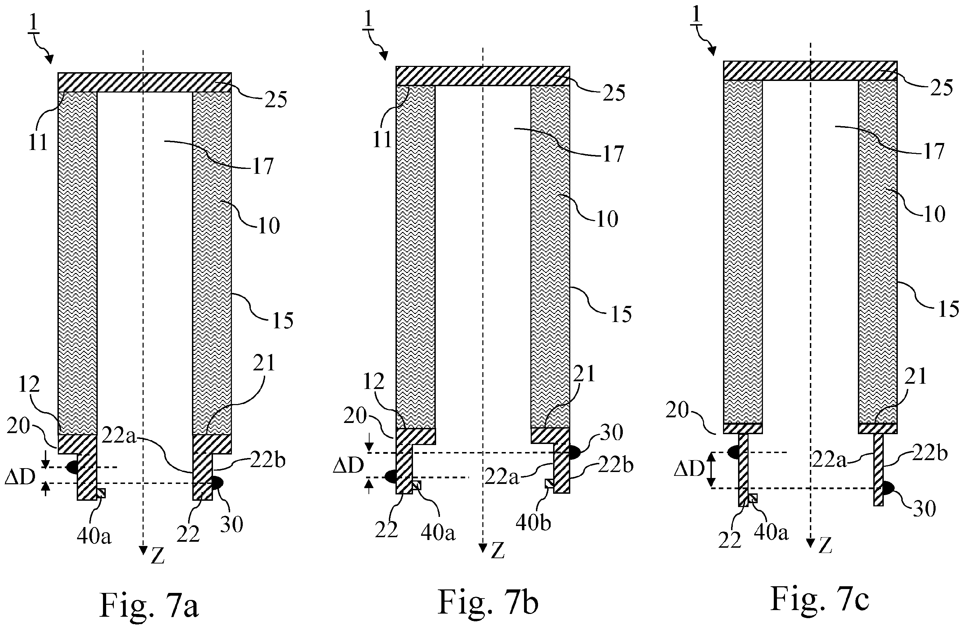

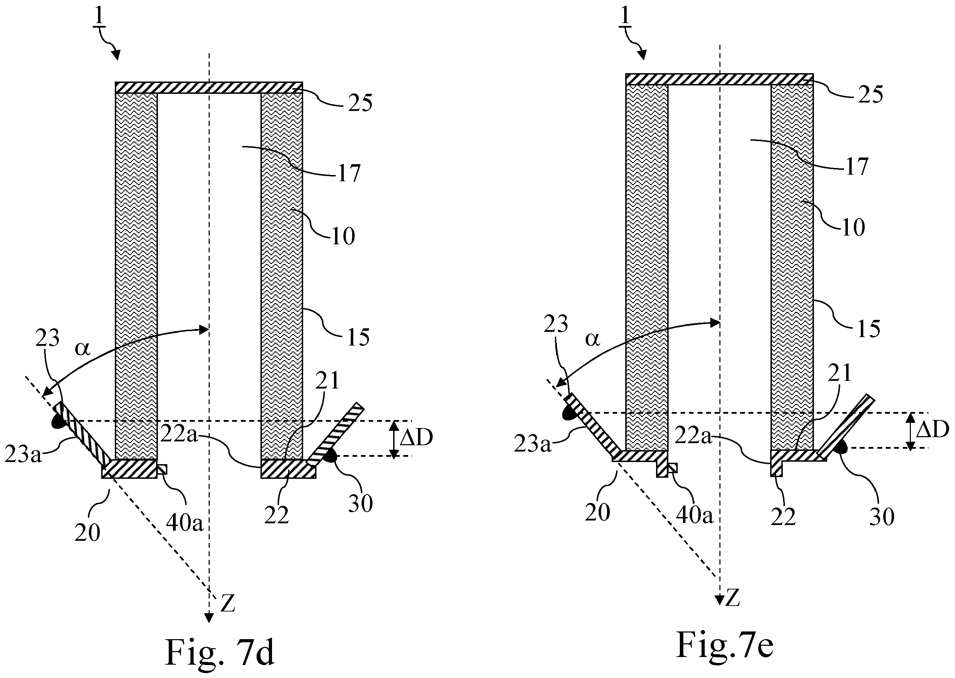

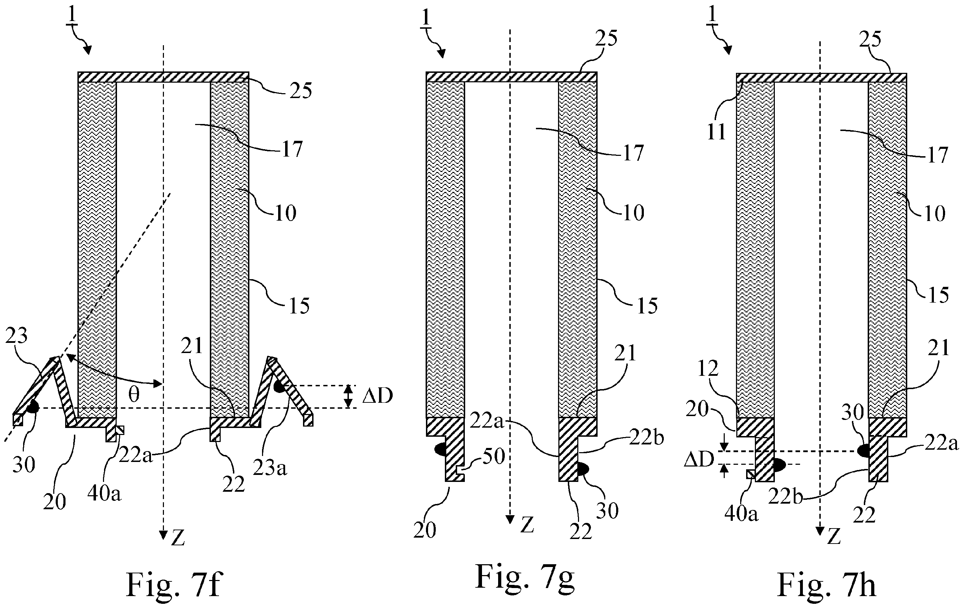

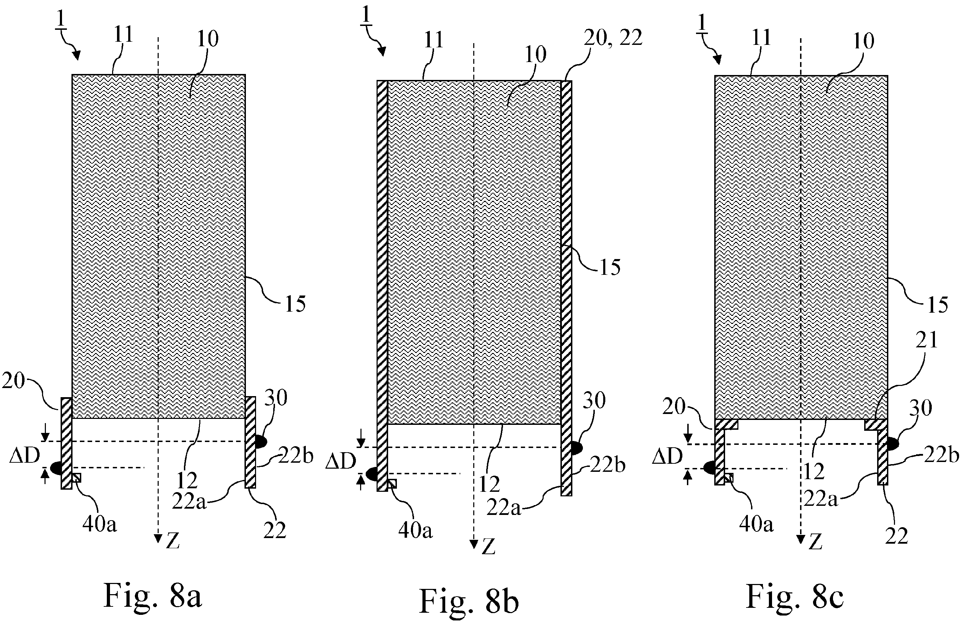

As illustrated on for example Fig.7a to Fig.7h and Fig.8a to Fig.8c, the supporting structure 20 comprises a first circumferential radial surface 22a circumscribing the longitudinal axis Z wherein the coupling arrangement of the filter element 40a, 40b, 50 is disposed on the first circumferential radial surface 22a. The supporting structure 20 further comprises a second circumferential radial surface 22b, 23a circumscribing the longitudinal axis Z, and wherein the seal 30 is disposed on the second circumferential radial surface 22b, 23a. Hence, a single support structure 20 is used for both supporting the seal 30 and the coupling arrangement.

The first 22a and second 22b circumferential radial surfaces have to be construed as two distinct surfaces, i.e. it are not the same surfaces, but two different identifiable surfaces.

The coupling arrangement in combination with the seal having deviating segments allows for a secure coupling between the filter element and the housing of the filter system, whereby a uniform and reproducible sealing force can be exercised on each of the seal segments. A risk of wrongly installing the filter element within the housing of the filter system is also strongly reduced or even excluded. Further, when installing the filter element in the housing of the filter system, the seal is only compressed gradually, which facilitates the installation of the filter element.

In embodiments, the first circumferential radial surface 22a is parallel with the second circumferential radial surface 22b.

**In** embodiments, the first circumferential radial surface 22a and/or the second circumferential radial surface 22b are parallel with the longitudinal axis Z. For example, for the filter configurations shown on Fig.7a to Fig.7c, Fig.7g, Fig.7h and Fig.8a to Fig.8c, the first circumferential radial surface 22a and the second circumferential radial surface 22b are shown to be parallel with the longitudinal axis Z.

On the other hand, for the embodiments shown on Fig.7d to Fig.7f, the first circumferential radial surface 22a, i.e. the surface supporting the coupling arrangement, is parallel with the longitudinal axis, while the second circumferential radial surface 23a, i.e. the surface supporting the seal, is slanted by an angle θ with respect to the longitudinal axis Z.

More generally, in embodiments, the second circumferential radial surface 23a supporting the seal 30 is slanted with respect to the first circumferential radial surface 22a supporting the coupling arrangement.

In embodiments, the second circumferential radial surface 23a is slanted with respect to the longitudinal axis Z by an angle θ, with 5° ≤ θ ≤ 85°, preferably with 20° ≤ θ ≤ 60°, more preferably with 30° ≤ θ ≤ 50°. In embodiments wherein the second circumferential radial surface 23a is slanted with respect to the first circumferential radial surface 22a, the same range for the angle θ applies.

In embodiments, the supporting structure 20 comprises a first circumferential radial wall 22 circumscribing the longitudinal axis Z. This first circumferential radial wall 22 comprises a first side and a second side opposite the first side, and wherein the first side corresponds to the first circumferential radial surface 22a supporting the coupling arrangement. In embodiments, as shown on Fig.7a to Fig.7c, Fig.7g, Fig.7h and Fig.8a to Fig.8c, the second side of the first circumferential radial wall 22 corresponds to the second circumferential radial surface 22b that is supporting the seal 30. Hence, in these embodiments, the seal is disposed on one side of the circumferential radial wall 22 and the coupling arrangement is disposed on the opposing side.

Advantageously, with the seal 30 having a second segment S2 axially separated from the first segment S1, when providing for example protrusions on one side of the first circumferential wall 22 and when placing the seal 30 on the other side of the first circumferential wall 22, the relative position of the protrusions and the segments of the seal can be defined such that the seal is avoiding the sink marks of the protrusions. This improves the sealing performance of the seal 30.

In embodiments, the first side, i.e. the first radial surface 22a, and the second side, i.e. the second radial surface 22b, of the first circumferential radial wall 22 are respectively an inner radial side and an outer radial side of the first circumferential radial wall 22.

In other embodiments, as shown for example on Fig.7h, the first side, i.e. the first radial surface 22a, and the second side, i.e. the second radial surface 22b, of the first circumferential radial wall 22, are respectively an outer radial side and an inner radial side of the first circumferential radial wall 22. In other words, depending on the embodiments, the first circumferential radial surface 22a supporting the coupling arrangement is either an inner radial surface or an outer radial surface.

For example, in embodiments wherein the coupling arrangement of the filter element are pins, e.g. bayonet pins, the pins are disposed on the inner radial side of the first circumferential wall 22. In other embodiments, pins, e.g. bayonet pins are disposed on the outer radial side of the first circumferential wall 22.

In embodiments, for example for embodiments wherein the seal 30 is coupled to the first circumferential radial wall 22, the seal is a radially directed seal for radially sealing to the housing of the filter system. For instance, when the filter element is installed in the housing of the filter system, the seal will compress in the radial direction.

In embodiments wherein the seal 30 is attached to the outer radial side of the first circumferential radial wall 22, the seal 30 is an outwardly directed radial seal.

For embodiments wherein the second circumferential radial surface 23a supporting the seal 30 is slanted, the supporting structure 20 comprises besides the first circumferential radial wall 22 also a second circumferential radial wall 23 circumscribing the longitudinal axis Z, and wherein the second circumferential radial wall 23 is slanted with respect to the longitudinal axis Z. In these embodiments, a surface side of the second circumferential radial wall 23 corresponds to the second circumferential radial surface 23a. Examples of such a second circumferential radial wall 23 are schematically shown on Fig.7d to Fig.7f. In these embodiments, as discussed above, a first side of the first circumferential radial wall 22 comprises a first side corresponding to the first circumferential radial surface 22a supporting the coupling arrangement .

Advantageously, by using a slanted radial wall for supporting the seal, when the filter element is installed in the housing of the filter system, the seal 30 is partly acting as a radial seal and partly as an axial seal, improving the seal performance.

In embodiments, at least a portion of the first circumferential radial wall 22 of the supporting structure 20 is forming a tube-shaped element elongating along the longitudinal axis Z, and this tube-shaped portion is configured for evacuating filtered fluid from the filter medium pack.

In embodiments, as illustrated on Fig.7a to Fig.7g, and Fig.8a to Fig.8b, at least a portion of the first circumferential radial wall 22 of the supporting structure 20 has a cylindrical shape. In this way, the first circumferential radial wall 22 is forming a tube-shaped element elongating along the longitudinal axis Z and configured for evacuating filtered fluid from the filter medium pack.

In some embodiments, as illustrated on Fig.1a and Fig.1d, wherein the first circumferential radial wall 22 is forming a tube-shaped element, an end portion of the circumferential radial wall 22 is undulated, or stepped, and follows a geometry that is matching with the geometry of the first and second segments of the seal.

In embodiments, the inner side and/or the outer side of the first circumferential radial wall are parallel with the longitudinal axis Z. For example if the first circumferential radial wall 22 has the shape of a tube, both the inner side and the outer side of the first circumferential radial wall are parallel with the longitudinal axis Z.

In embodiments, a cross-section in a plane perpendicular to the longitudinal axis Z of the first circumferential radial wall 22 can have the shape of for example a circle or an oval.

In embodiments, the supporting structure 20 and/or the coupling arrangement is made of or at least partly made of a thermoplastic material, preferably, wherein the thermoplastic material is any of the following materials or mixtures and combinations thereof: acrylonitrile butadiene styrene, polypropylene, polyamide, polyethylene terephthalate, polylactic acid, polyethylene, polycarbonate, polystyrene, or polyvinyl chloride.

In embodiments, the seal 30 is made of or at least partly made of any of the following list of materials or a mixture or combination thereof: rubber, thermoplastic elastomer, thermoset elastomer, thermoplastic vulcanizate or polyurethane.

In embodiments, the supporting structure 20 forms a single body. This can for example be realized by a molding manufacturing process.

In embodiments, the seal 30 can be removably coupled to the supporting structure 20, for example by providing a seal receiving groove on the supporting structure. In other embodiments, the seal 30 is permanently attached to the supporting structure 20, for example by gluing, injection moulding, or any other means.

In further embodiments, both the supporting structure 20 and the seal 30 form a single body manufactured by a multi-component injection molding manufacturing process.

In preferred embodiments, the supporting structure 20, the seal 30 and the coupling arrangement of the filter element form a single body manufactured by a multi-component injection molding manufacturing process. This results in a robust filter element obtained in cost-effective way.

The supporting structure 20 is sealingly coupled to the filter medium pack. In embodiments, this coupling can be a permanent attachment, made for example by gluing or by thermal welding.

The seal 30 is either removeably coupled to the second circumferential radial surface 22b, 23a or the seal is permanently coupled to the second circumferential surface.

In embodiments the filter element comprises respectively a closed end cap 25 and an open end cap at the first 11 and second 12 axial end 12 of the filter medium pack. In embodiments, as for example schematically illustrated on Fig.7a and Fig.7b, the first radial circumferential radial wall 22 comprises an axial side forming a flange member 21 attached to the second axial end 12 of the filter medium pack for forming the open end cap at the second axial end 12 of the filter medium pack. The flange member 21 is flange comprising a central opening.

In embodiments as illustrated on Fig.1c, Fig.1d and Fg.8c, the supporting structure 20 comprises a flange member 21 attached to the second axial end 12 of the filter medium pack and configured for forming an open end cap at the second axial end 12 of the filter medium pack. Hence the flange member is for example a flange comprising a central opening to evacuate filtered fluid. In embodiments, the flange member 21 is attached to an axial end of the first circumferential radial wall 22.

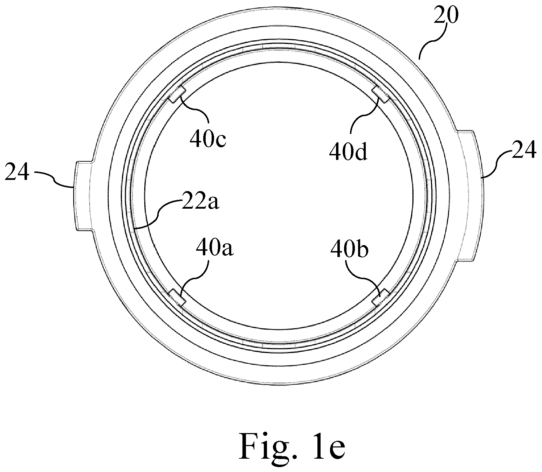

In embodiments wherein the filter element is a safety filter element, i.e. a secondary filter element for backing up a primary filter element, the flange member 21 of the supporting structure 20 further comprises one or more wing members 24 as illustrated on Fig.1a and Fig.1e. These wing members 24 are to be construed as alignment members for aligning the primary filter element with respect to the safety filter element.

### Coupling arrangements

Various types of coupling arrangements for the filter element that can engage with a complementary coupling arrangement of the housing of the filter system can be utilized.

In embodiments, the coupling arrangement of the filter element comprises one or more protrusions 40a, 40b, 40c, 40d for engaging with protrusion receiving elements of the complementary coupling arrangement of the housing of the filter system.

The protrusions are disposed on the first circumferential radial surface 22a of the supporting structure 20. In embodiments, the protrusions are radially protruding from the first circumferential radial surface 22a.

In embodiments a protrusion is any of: a pin, a knob, a rib, an emboss, a pivot, a nipple or a combination thereof.

With reference to Fig.1e, Fig.7a to Fig.7f, Fig.7h, and Fig.8a to Fig.8c, the protrusions are represented as pins 40a, 40b, 40c, 40d radially protruding from the first circumferential radial surface 22a. For example, on Fig.7a one pin 40a is visualized protruding from the first circumferential radial surface 22a, while on Fig.7b two pins 40a and 40b are visualized, and on Fig.1e, an embodiment with four pins 40a, 40b, 40c and 40d is shown. The pins can also be named tabs.

In embodiments, the coupling arrangement of the filter element is a bayonet coupling arrangement wherein the protrusions of the coupling arrangement are for example bayonet pins configured for engaging with a corresponding bayonet slot of the housing of the filter system. The bayonet slot typically has an arc shape to allow the bayonet pin to make a rotational motion within the slot.

Indeed, for performing a bayonet coupling, generally a combination of a rotational motion and a translational motion of the filter element with respect to the longitudinal axis for securely coupling the filter element to the housing of the filter system is required. Depending on the geometry of the bayonet slots, typically a rotation between 30° and 90° rotation is required.

In other embodiments, the coupling arrangement is configured for forming a closure between the coupling arrangement of the filter element and the complementary coupling arrangement of the housing of the filter system by performing a translation motion parallel with the longitudinal axis, i.e. without performing a rotational motion. In these embodiments the engagement of the coupling arrangement of the filter element with the coupling arrangement of the housing of the filter system can for example be a snap-fit connection.

In embodiments, the coupling arrangement of the filter element comprises, instead of protrusions, one or more protrusion receiving elements 50 for engaging with protrusions of the complementary coupling arrangement of the housing of the filter system

In embodiments, as for example illustrated on Fig.7g, the protrusion receiving elements are slots 50 or grooves disposed on the first circumferential radial surface 22a. For these embodiments, the complementary arrangement of the filter housing comprises for example pins.

Typically, when the coupling arrangement of the filter element comprises a slot or a groove, the slot or groove can have the shape of an arc, for forming a bayonet coupling. In embodiments, the slot or groove can have a locking end portion configured for locking the pin when the pin has reached the end of the slot or groove.

The number protrusions, or alternatively the number of protrusion receiving elements, of the coupling arrangement of the filter element can vary from embodiment to embodiment. By providing more than one protrusion or protrusion receiving element, the sealing force acting on the seal is more uniformly distributed. In embodiments, the coupling arrangement of the filter element comprises two or more protrusions, e.g. two or more pins 40a, 40b. Preferably the coupling arrangement comprises three or more protrusions, e.g. three or more pins 40a, 40b, 40c more preferably four or more protrusions, e.g. four or more pins 40a, 40b, 40c, 40d.

In alternative embodiments, the coupling arrangement of the filter element comprises two or more protrusion receiving elements 50, preferably three or more protrusion receiving elements and more preferably four or more protrusion receiving elements. The protrusion receiving elements being for example slots or grooves.

Preferably, in order to have a homogenous pressure on the various segments of the seal, the number of protrusions, e.g. pins, or protrusions receiving elements, e.g. slots, is determined in relation to the number of second segments S2, i.e. the number of deviating segments, of the seal 30.

In embodiments wherein the coupling arrangement of the filter element comprises a plurality of protrusions 40a, 40b, 40c, 40d and a plurality of first S1 and second S2 segments, the number of protrusions is selected to be equal or larger than the number of second segments S2.

Similarly, for embodiments wherein the coupling arrangement of the filter element comprises a plurality of protrusion receiving elements 50 and a plurality first S1 and second S2 segments, the number of protrusions receiving elements is selected to be equal or larger than the number of second segments S2.

### Examples of seals

As discussed above, the seal according to the present disclosure is characterized in that it comprises at least a first segment S1 and a second segment S2 wherein at least a portion PS2 of the second segment S2 is axially, i.e. with respect to the longitudinal axis Z, separated from the first segment S1. In other words, there is a non-zero axial separation distance ΔD, ΔD1, ΔD2 , i.e. in a direction of the longitudinal axis Z, between at least a portion PS2 of the second segment S2 and the first segment S1.

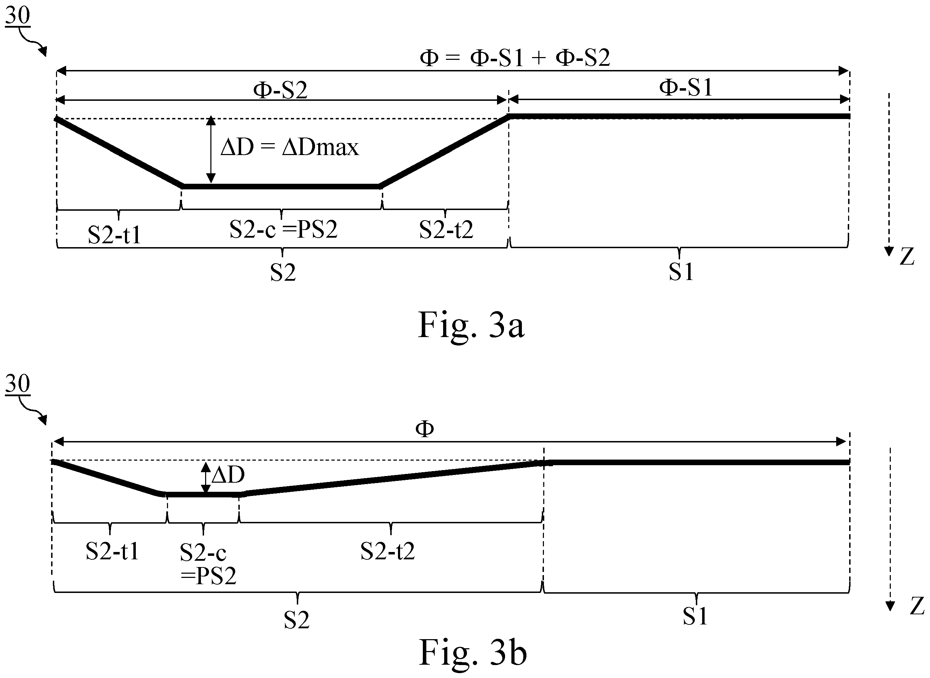

In order to illustrate examples of various geometries of a seal comprising such a second segment deviating from a first segment according to the present disclosure, a schematic representation of various embodiments of such a seal 30 is shown in Fig.3a to Fig.3h. These schematic figures are to be interpreted as if the seal is cut and positioned on a flat plane. In this first series of examples, the seal 30 comprises one first S1 and one second S2 segment, having respectively a first circumference φ1 and a second circumference φ2, and wherein the sum of the first and second circumference is equal to the total circumference φ of the seal 30.

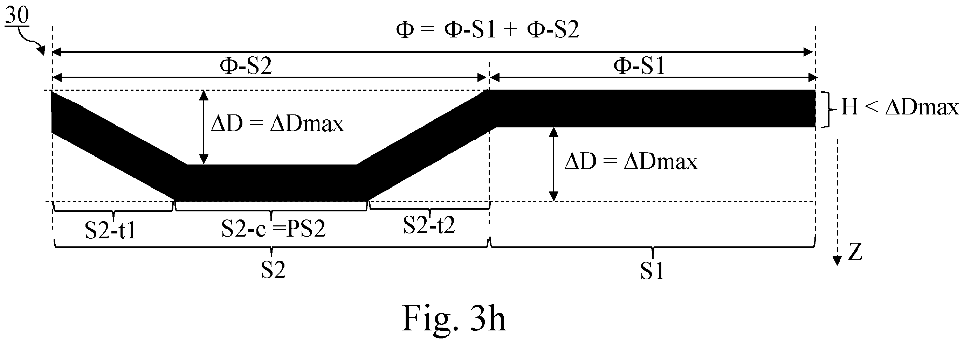

In embodiments, as illustrated on Fig.3a, Fig.3b and Fig.3h, the second segment S2 comprises a central segment portion S2-c and two transition segment portions S2-t1 and S2-t2 adjoining the central segment portion S2-c, and wherein the central segment portion S2-c is oriented parallel with respect to the first segment S1. In these embodiments, the two transition segment portions S2-t1 and S2-t2, or at least parts of the two transition segment portions, are oriented at an oblique angle with respect to the first segment S1, and hence also with respect to the central segment portion S2-c. Such a deviating second segment S2 having two transition segment portions can also be named a trapezoidal segment. This type of seal can also more generally be named stepped seal. As illustrated on the figures, in these embodiments the second segment S2 comprises a portion PS2, i.e. the central segment portion S2-c, that is axially separated from the first segment S1 by a separation distance ΔD.

In embodiments wherein the first segment S1 is parallel with the central portion S2-c of the second segment S2, the separation distance ΔD is also the maximum axial separation distance ΔDmax between the first and the second segment. This maximum separation distance ΔDmax can also be named step-height.

In embodiments, the transition portions S2-t1 and S2-t2 can have the same circumferential length, as schematically shown on Fig.3a, while in other embodiments, as shown for example on Fig.3b, the circumferential length of the transition portions can be different, i.e. the slope of the transition portions is different.

The geometry of the seal as shown on Fig.3h is the same as the one shown on Fig.3a, i.e. a stepped seal as discussed above, except that on Fig.3h, the seal is explicitly shown to have a height H measured along the longitudinal axis Z. Preferably, in embodiments, the height H of the seal 30, measured along the longitudinal axis Z, is selected to be smaller than the maximum separation distance ΔDmax between the first segment S1 and the second segment S2. This avoids that a wrong filter element having for example a planar seal would be installed in the filter system.

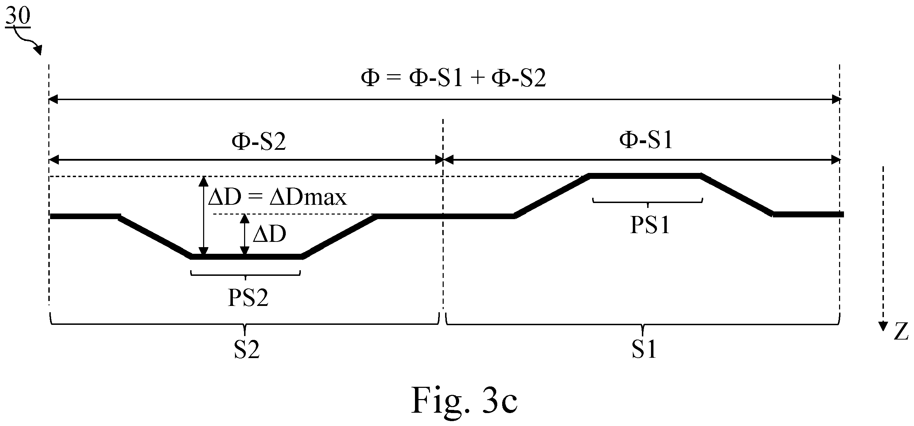

With reference to Fig.3c, a further embodiment of a seal 30 is shown wherein at least a portion PS1 of the first seal segment S1 is parallel with a portion PS2 of the second seal segment S2.

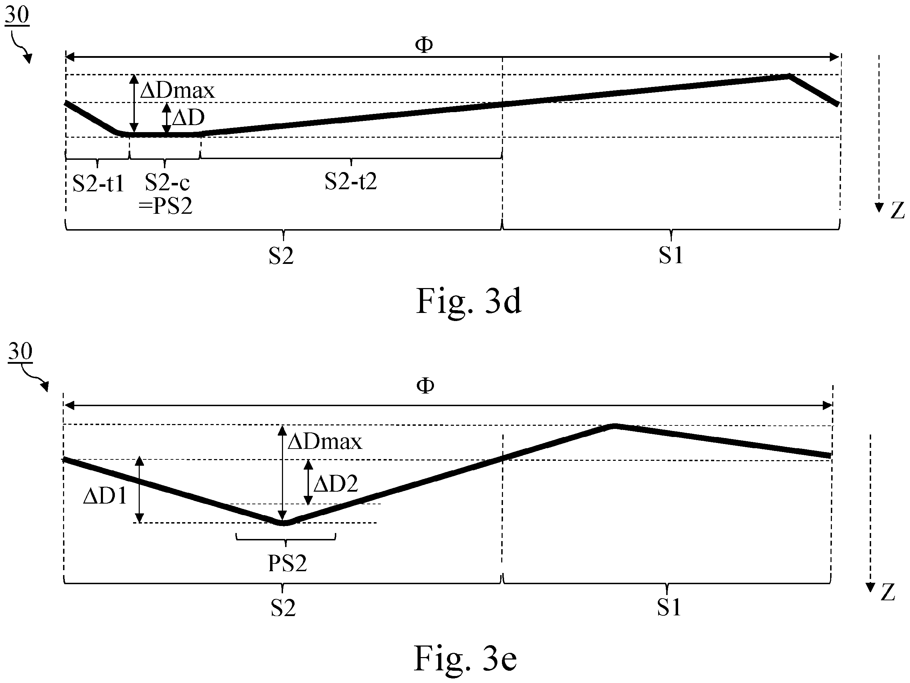

In the embodiment, shown on Fig.3d, the second segment S2 also comprises a central portion S2-c and two adjoining transition portions S2-t1 and S2-t2. In this embodiment, the first segment is however not parallel with the central portion S2-c, as is the case for the embodiments shown for example on Fig.3a and Fig.3b. Also for this embodiment shown on Fig.3d, a maximum separation distance ΔDmax can be identified as being the maximum separation distance between the first and second segment, as measured along the longitudinal axis Z. As schematically illustrated on Fig.3d, the portion PS2 of the second segment, i.e. the central portion S2-c, is axially separated from the first segment S1 by a separation distance ΔD. In this embodiment, the maximum separation distance ΔDmax can also be construed as step height.

With reference to Fig.3e, an embodiment of seal is shown having a triangular shape, i.e. the first and the second segment have a triangular shape. Also here, the first segment S2 comprises at least a portion PS2 that is axially separated from the first segment, and depending on what part of the portion PS2 is selected the separation distance towards the first segment can vary between a first separation distance ΔD1 and a second separation distance ΔD2. The maximum separation distance ΔDmax between the first S1 and the second segment S2 is also shown on Fig.3e.

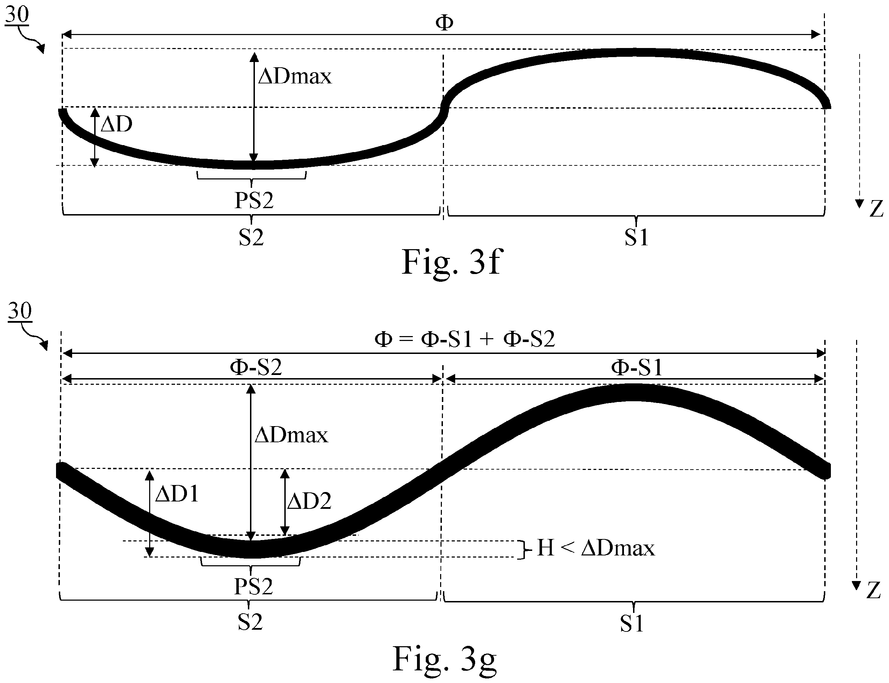

With reference to Fig.3f and Fig.3g, a wave-type of seal is shown wherein the seal 30 has a shape of a wave. For these type of embodiments, a first and a second segment S1 and S2 can be identified wherein at least a portion PS2 of the second segment S2 is axially separated from the first segment S1. An example of an arbitrary selection of such a portion PS2 is schematically shown on Fig.3f and Fig.3g, but of course any other selection, i.e. a narrower or a broader selection of the PS2 segment portion is possible. For the wave-type of seals, also a maximum separation distance between the first and the second segment can be identified as being equal to ΔDmax. In preferred embodiments, the height H of the seal 30 is lower than the maximum separation distance ΔDmax.

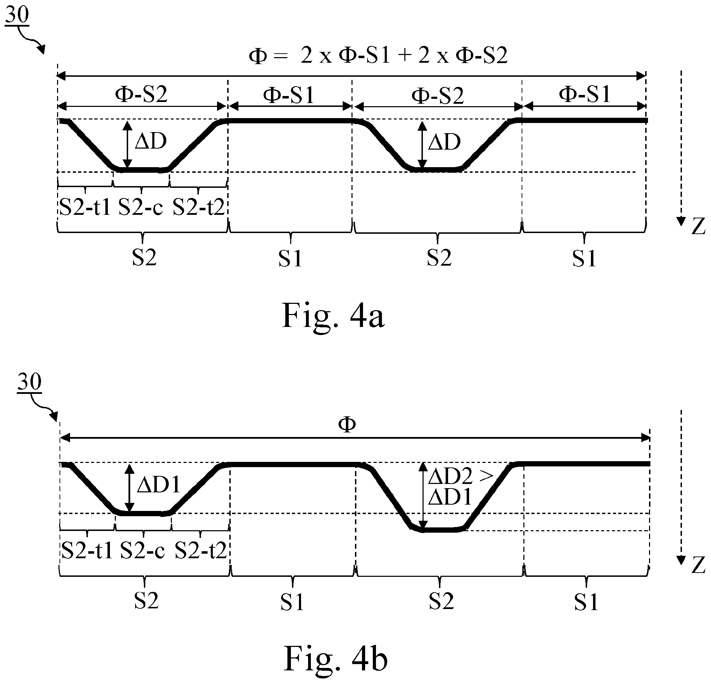

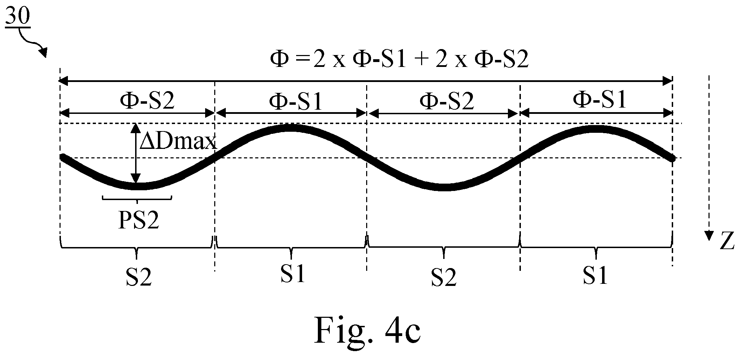

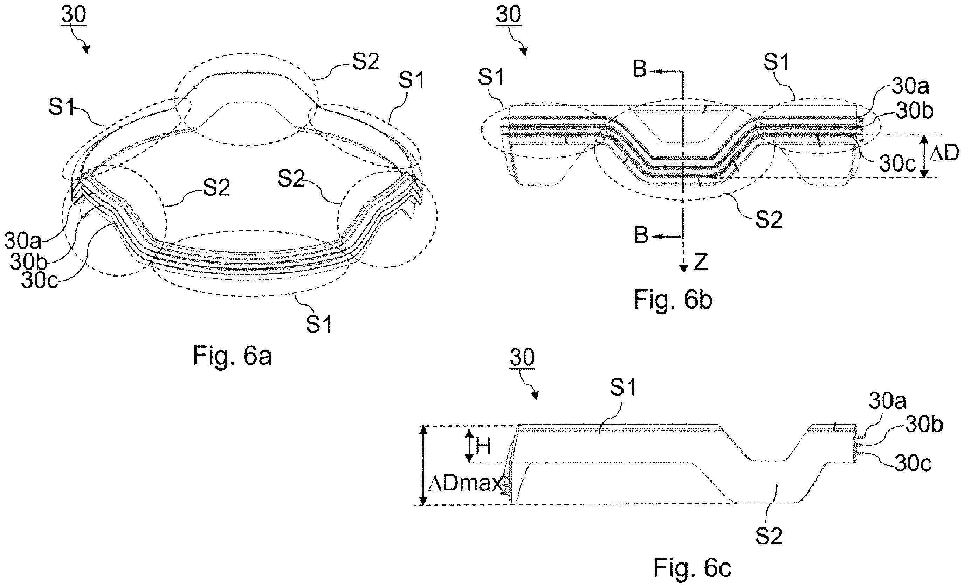

In embodiments, the seal 30 comprises a plurality of first segments S1 and a plurality of second segments S2, and wherein each of the first segments is alternating with one of the second segments. In Fig.4a and Fig.4b, examples of embodiments comprising two first segments S1 and two second segments S2 are shown. In Fig.6a to Fig.6b, an example of an embodiment of a seal is shown comprising three first segments S1 and three second segments S2.

When the seal comprises multiple first segments and multiple second segments, the separation distance ΔD between adjoining first and second segments is not necessarily the same for all pairs of first and second segments. With reference to the embodiments shown on Fig.4a and Fig.6a to Fig.6c, the separation distance ΔD is the same for all pairs of first and second segments. In other embodiments, as for example illustrated on Fig.4b, one pair of first S1 and second S2 segments can be separated by a first separation distance ΔD1, while another pair of first S1 and second S2 segments can be separated by a second separation distance ΔD2, different from the first separation distance.

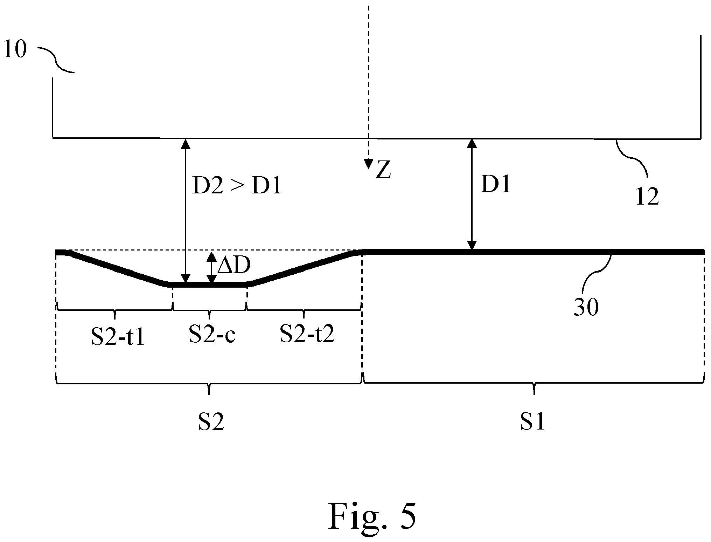

In Fig.5, an example of a geometry of a stepped seal in relation to the filter medium pack is shown. In this example, the seal 30 comprises one first S1 and one second S2 segment and each part of the first segment S1 is at the same axial distance D1 from the second axial end 12 of the filter medium pack 10, while parts of the second segment S2 are at a distance from the second axial end 12 that varies between the first distance D1 and a second distance D2, larger than the first distance D1.

In embodiments, each part of the first segment S1 of the seal 30 is located at a same axial distance D1 from the second axial end 12 of the filter medium pack while each part of a central segment portion S2-c of the second segment S2 is located at a same second axial distance D2, different from the first axial distance D1, from the second axial end 12 of the filter medium pack. Typically, in these embodiments, the second segment S2 further comprises, as discussed above, two transition segment portions S2-t1 and S2-t2 adjoining the central segment portion S2-c. For each transition segment, parts of the segment are located at an axial distance from the second axial end of the filter medium pack that varies between the first D1 and the second D2 axial distance. The first and second axial distance are measured in a direction parallel with the longitudinal axis Z.

In embodiments, the maximum separation distance ΔDmax, as illustrated on Fig.3a to Fig.3h, between the first segment S1 and the second segment S2 measured along the longitudinal axis Z, is between 5 mm and 200 mm, more preferably between 5 mm and 150 mm.

In embodiments, the seal 30 is of a type that is generally named a lip seal or a wiper seal. Such a lip seal 30 comprises at least one circumferential seal lip 30a, 30b,30c. The embodiment of a filter element shown in Fig.1a to Fig.1d, comprises a seal with two circumferential seal lips 30a and 30b. The embodiments of a seal 30 shown on Fig.6a to Fig.6c, is an example of a lip seal 30 comprising three circumferential seal lips 30a, 30b and 30c.

For embodiments wherein the lip seal comprises two or more circumferential seal lips 30a, 30b,30c, the seal lips are generally disposed in a spaced, parallel relationship.

In embodiments, the circumferential seal lip 30a, 30b,30c is disposed at an oblique angle with respect to the first circumferential radial wall 22.

In further embodiments, the circumferential seal lips of the lip seal have a small slant with respect to a base of the lip seal. In this way, a preferred direction of plying is provided.

The lip seal in combination with the coupling facilitates the performance of a roto-translational motion with the filter element during installation of the filter element in a housing of the filter system as the flexibility of the seal lips allows the stepped lip seal to temporarily and adequately be bended inwardly during the rotational motion.

### Filter medium pack

The filter element according to the present disclosure is not limited to a specific filter medium pack.

Typically, the filter medium pack 10 of the filter element 1 according to the present disclosure comprises a circumferential radial side 15 elongating along a longitudinal axis Z from a first axial end 11 to a second axial end 12, opposite the first axial end.

In embodiments, the filter medium pack 10 is rotational symmetric with respect to the longitudinal axis Z. For example the circumferential radial side 15 of the filter medium pack 10 can have a cylindrical shape.

In other embodiments, the filter medium pack can have a non-cylindrical shape, for example wherein a cross-section of the filter medium pack has an oval shape or a peanut shape.

In embodiments, as for example illustrated on Fig.7a to Fig.7g, the filter medium pack 10 has an inner cavity 17 extending between the first axial end 11 and the second axial end 12. The filter medium pack can for example have the shape of a hollow cylinder.

In these embodiments wherein the filter medium pack 10 has an inner cavity 17, the filter element comprises a closed end cap 25 attached to the first axial end 11 and an open end cap attached to the second axial end 12. As illustrated on Fig.7a to Fig.7g, this open end cap at the second axial end 12 of the filter medium pack is formed by the supporting structure 20. For instance, the first circumferential radial wall 22 of the supporting structure 20 corresponds to a radial wall of the open end cap.

In embodiment wherein the filter medium pack 10 comprises an inner cavity 17, after installation of the filter element in a housing of a filter system, the fluid to be filtered is crossing the filter media in a direction transverse to the longitudinal direction Z. For example, fluid to be filtered traverses through the circumferential radial side 15 of the filter medium pack towards the inner cavity 17 and filtered fluid exits the filter medium at the second end axial end 12 of the filter medium pack 10 through the open end cap.

In embodiments, the filter media packs with an interior cavity are pleated filter media packs.

Typically, the pleated filter media have a plurality of pleats placed in a closed loop, for example an annulus. In this way, a hollow filter body is formed extending in a longitudinal direction Z. The hollow filter body has a first opening and a second opening at respectively a first end and a second end of the hollow filter body. The pleats are for example formed by folding a sheet of filter paper.

A plurality of outer tips of the plurality of pleats is forming an outer circumferential perimeter of the hollow filter body and the circumferential radial side 15 of the filter medium pack 10 corresponds to this circumferential perimeter formed by the outer tips of the pleats. The first axial end 1 and the second axial end 12 of the filter medium pack 10 corresponds to respectively the first and the second end of the hollow body. In embodiments, typically the folding lines of the pleated filter media are oriented essentially parallel with the longitudinal axis Z.

In other embodiments, as illustrated on Fig.8a to Fig.8c, the filter medium pack 10 is a so-called straight-through filter medium pack wherein the filter media conducts filtration of the fluid by having the fluid crossing the filter medium pack in a flow direction from the first axial end 11, forming an inlet flow face, to the second axial end 12, forming an outlet flow face for the filter media pack.

In embodiments, the straight-through filter medium pack 10 comprises fluted filter media, also known as Z-filter media. An example of commercially available Z-filer media is known under the name Powercore^{™} as manufactured by Donaldson Company Inc.

In embodiments, the fluted filter media may be formed by coiled layers of filter material.

In embodiments, by coiling layers of filter material, a filter medium pack is obtained wherein the circumferential radial side 15 of the filter medium pack is formed by a surface of an outer layer of the coiled filter media.

In embodiments the filter media may be formed by coiled layers of fluted filter material wherein each of these coiled layers includes inlet flutes and outlet flutes oriented essentially parallel with the longitudinal direction Z. By coiling layers of fluted filter material, a filter medium pack is formed wherein the circumferential radial side 15 of the filter medium pack is formed by a surface of an outer layer of the coiled fluted filter media.

Generally, in embodiments comprising coiled layers of fluted filter material, each of the layers of coiled fluted material include a set of inlet flutes and a set of outlet flutes. The set of inlet flutes are open at the axial inlet side of the filter body in order to receive the unfiltered fluid and the inlet flutes are closed at the axial outlet side of the filter body. On the other hand, the set of outlet flutes are closed at the axial inlet side and open at the axial outlet side to allow the filtered fluid to exit the filter body. In this way, the fluid is forced to make a Z-shaped trajectory to flow from the axial inlet side to the axial outlet side of the filter medium pack.

In further embodiments comprising coiled layers of filter material, an outer layer of the coiled filter material is at least partly covered with a plastic wrap. The plastic wrap is to be construed as a protecting cover. In this way, at least a portion of the circumferential face of the filter medium pack is formed by the plastic wrap. The plastic wrap can for example be glued to the outer layer of the filter material or the plastic wrap can be an adhesive tape. In embodiments, as further discussed below, the plastic wrap can also be thermally welded to the outer layer of the coiled layers of filter material.

In embodiments, as illustrated in Fig.8b, the supporting structure 20 is also forming a protective cover around the filter medium pack 10. For instance, in this embodiment, the supporting structure 20 can be a cylindrical shell wherein a portion of the shell is corresponding to the first circumferential radial wall 22 from which the pin 40a is protruding from the inside of the first circumferential radial wall 22.

### Filter assembly

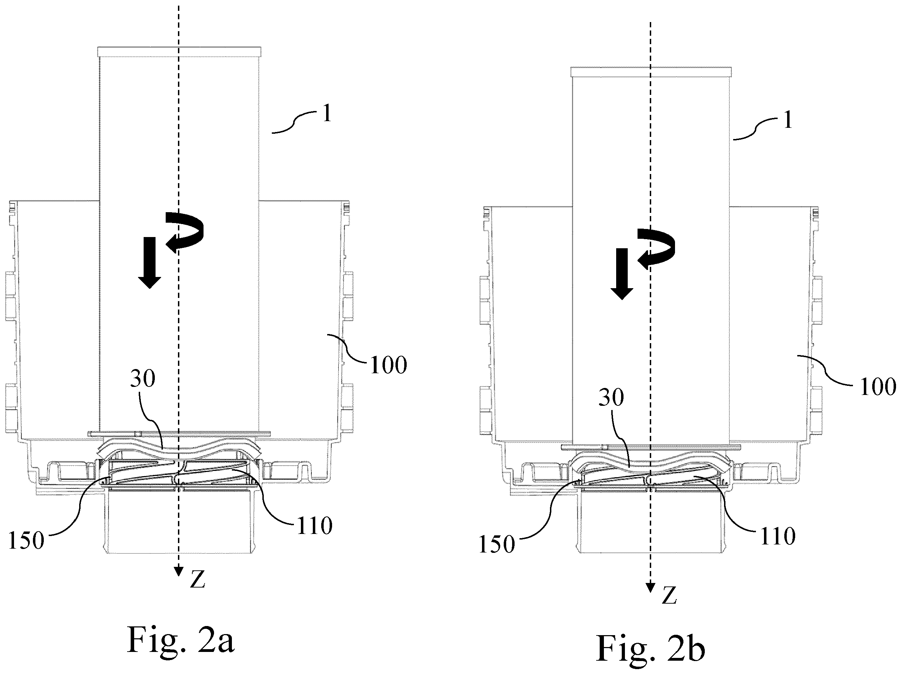

According to a further aspect of the present disclosure, a filter assembly comprising a filter element 1 as discussed above and a housing 100 enclosing the filter element 1 is provided. An example of an embodiment of a filter assembly according to the present disclosure comprising a filter element 1 and a housing 100 is shown in Fig.2a to Fig.2c.

In embodiments, the housing 100 comprises a tubular frame structure 150 that is located inside the housing and this tubular frame structure 150 has a first circumferential wall. The coupling arrangement that is complementary to the coupling arrangement of the filter element 1 is then disposed to this first circumferential wall of the housing. For instance, the first circumferential wall can be an outer radial wall of the tubular frame structure 150.

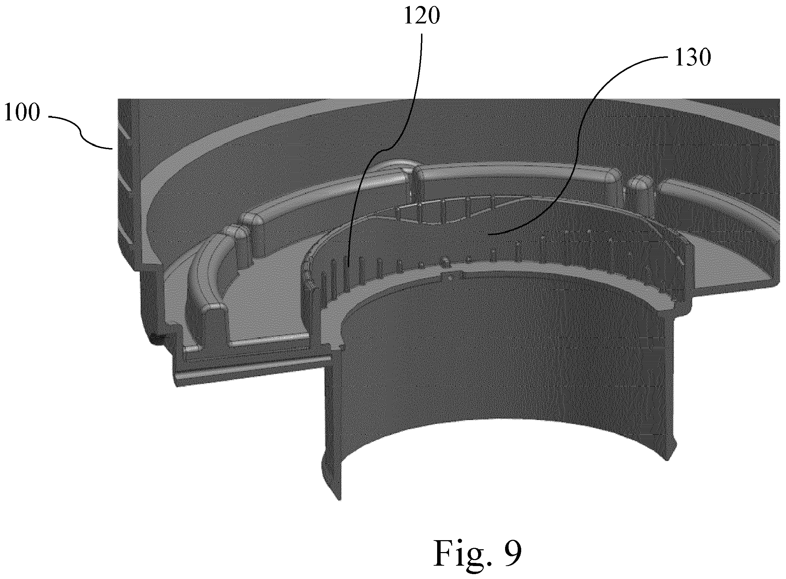

The housing further comprises a second circumferential wall forming a sealing surface 130 that is configured for receiving the seal 30 of the filter element. In Fig.9 a portion of a housing of a filter system is shown, illustrating a sealing surface 130 that matches with the geometry of the stepped seal of the filter element. In this example, ribs 120 are used to delineate a stepped sealing surface 130 corresponding to the shape of the stepped seal of the filter element to be inserted in the housing. The ribs prohibit the installation of for instance a wrong filter element having a different seal geometry.

The coupling arrangement illustrated on Fig.2a to Fig.2c, is a bayonet coupling arrangement wherein the coupling arrangement of the filter element comprises bayonet pins 40a, 40b, 40c, 40d and the coupling arrangement of the housing of the filter system comprises bayonet slots 110, and wherein the pins are configured for engaging with the slots. When inserting the filter element in the housing and by performing a roto-translational movement of the filter element, the filter element 1 becomes coupled to the housing 100 through an interaction of the bayonet coupling arrangement of the filter element with the complementary bayonet coupling arrangement of the housing.

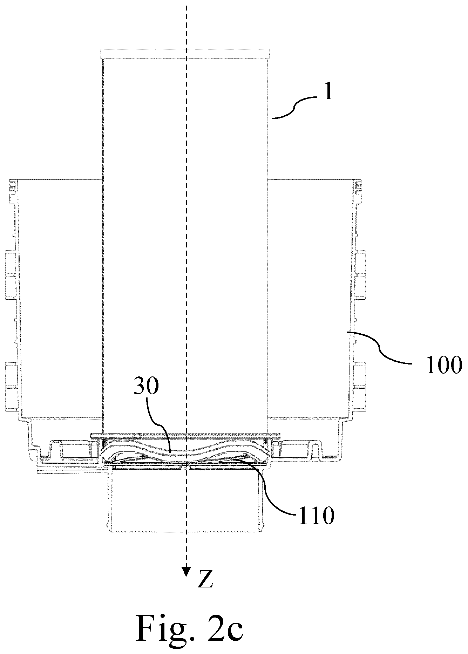

The process of inserting the filter element in the housing through a roto-translation motion of the filter element 1 is illustrated with Fig.2a to Fig.2c. As illustrated with Fig.2a, the roto-translation starts when the bayonet pin of the filter element is placed into the starting point of the slot of the bayonet complementary coupling arrangement located inside the housing. In Fig.2b, the filter element is further rotated such that the filter element translates in the longitudinal direction until the bayonet pin has reached an end point of the slot, shown on Fig.2c.

In embodiments, the filter assembly comprises both a main filter element and a safety filter element for backing up a failure of the main filter element. The safety filter element can be a filter element as discussed above comprising a stepped-seal and a coupling arrangement.

In these embodiments including a safety filter, the housing 100 encloses both the main filter element and the safety filter element. Also for this embodiment, the housing comprises a tubular frame structure 150 located inside the housing and which has a first circumferential wall. The coupling arrangement 110 that is complementary to the coupling arrangement 40a, 40b, 40c, 40d of the filter element 1 is disposed to the first circumferential wall of the tubular frame structure. The housing further comprises a second circumferential wall forming a sealing surface 130 configured for receiving the seal 30 of the filter element.

### Detailed characterizations

Here below, text is provided in the form of clauses. The clauses comprise characterizations indicating a variety of options, features, and feature combinations that can be used in accord with the teachings of the present disclosure. Alternate characterizations of the ones given, but consistent with the descriptions herein above, are possible In summary, according to the present disclosure, the following clauses could for instance be claimed:
1. A filter element (1) for insertion into a housing of a filter system comprising:
   - a filter medium pack (10) for filtering a fluid, comprising a circumferential radial side (15) elongating along a longitudinal axis (Z) from a first axial end (11) to a second axial end (12) opposite the first axial end,
   - a seal (30) for avoiding the fluid from bypassing the filter medium pack when the filter element is installed in the filter system,
   - a supporting structure (20) for supporting the seal (30),
   characterized in that the seal (30) comprises at least a first segment (S1) and a second segment (S2) adjoining the first segment (S1), and wherein at least a portion (PS2) of said second segment (S2) is axially separated from said first segment (S1),
   and in that the filter element (1) comprises:
   - a coupling arrangement for engaging with a complementary coupling arrangement located inside the housing of the filter system,
   and in that the supporting structure (20) comprises a first circumferential radial surface (22a) circumscribing said longitudinal axis (Z) and a second circumferential radial surface (22b, 23a) circumscribing said longitudinal axis (Z), and wherein the coupling arrangement of the filter element is disposed on said first circumferential radial surface (22a) and wherein the seal (30) is disposed on the second circumferential radial surface (22b, 23a).
2. The filter element according to clause 1 wherein the coupling arrangement of the filter element comprises one or more protrusions (40a, 40b, 40c, 40d) for engaging with protrusion receiving elements of the complementary coupling arrangement of the housing of the filter system, or alternatively, wherein the coupling arrangement of the filter element comprises one or more protrusion receiving elements (50) for engaging with protrusions of the complementary coupling arrangement of the housing of the filter system.
3. The filter element according to clause 2 wherein said one or more protrusions are radially protruding from said first circumferential radial surface (22a).
4. The filter element according to any of clauses 2 to 3 wherein a protrusion of said one or more protrusions (40a, 40b, 40c, 40d) is any of: a pin, a knob, a rib, an emboss, a pivot, a nipple or a combination thereof.
5. The filter element according to any of clauses 2 to 4 wherein the coupling arrangement of the filter element comprises two or more protrusions (40a, 40b, 40c, 40d) preferably three or more protrusions (40a, 40b, 40c, 40d), more preferably four or more protrusions (40a, 40b, 40c, 40d).
6. The filter element according to any of clauses 2 to 5 wherein the seal (30) comprises a plurality of first (S1) and second (S2) segments, and wherein the coupling arrangement of the filter element comprises a plurality of protrusions (40a, 40b, 40c, 40d) and wherein the number of protrusions is equal or larger than the number of second segments.
7. The filter element according to clause 2 wherein said one or more protrusion receiving elements is any of: a slot (50), a groove or a combination thereof.
8. The filter element according to clause 2 or clause7 wherein the coupling arrangement of the filter element comprises two or more protrusion receiving elements (50), preferably three or more protrusion receiving elements (50), more preferably four or more protrusion receiving elements (50).
9. The filter element according to clause 2, clause 7 or clause 8 wherein the seal (30) comprises a plurality of first (S1) and second (S2) segments, and wherein the coupling arrangement of the filter element comprises a plurality of protrusion receiving elements (50) and wherein the number of protrusion receiving elements is equal or larger than the number of second segments.
10. The filter element according to any of previous clauses wherein said first circumferential radial surface (22a) is parallel with said second circumferential radial surface (22b).
11. The filter element according to any of clauses 1 to 9 wherein said first circumferential radial surface (22a) and/or said second circumferential radial surface (22b) are parallel with said longitudinal axis (Z).
12. The filter element according to any of previous clauses wherein the supporting structure (20) comprises a first circumferential radial wall (22) circumscribing said longitudinal axis (Z) and wherein said first circumferential radial wall (22) comprises a first side and a second side opposite the first side, and wherein said first side corresponds to said first circumferential radial surface (22a).
13. The filter element according to clause 12 wherein the second side of the first circumferential radial wall (22) corresponds to said second circumferential radial surface (22b).
14. The filter element according to clause 13 wherein said first side and said second side of the first circumferential radial wall (22) are respectively an inner radial side and an outer radial side of the first circumferential radial wall (22), or alternatively, wherein said first side and said second side of the first circumferential radial wall (22) are respectively an outer radial side and an inner radial side of the first circumferential radial wall (22).
15. The filter element according to any of clauses 1 to 9 wherein said second circumferential radial surface (23a) is slanted with respect to said longitudinal axis (Z).
16. The filter element according to any of clauses 1 to 9 wherein said second circumferential radial surface (23a) is slanted with respect to said first circumferential radial surface (22a).
17. The filter element according to any of clauses 1 to 9 wherein said first circumferential radial surface (22a) is parallel with said longitudinal axis (Z) and said second circumferential radial surface (23a) is slanted with respect to said longitudinal axis (Z).
18. The filter element according to any of clauses 15 to 17 wherein said second circumferential radial surface (23a) is slanted by an angle θ, with 5° ≤ θ ≤ 85°, preferably with 20° ≤ θ ≤ 60°, more preferably with 30° ≤ θ ≤ 50°.
19. The filter element according to any of clauses 15 to 17 wherein said slanted second circumferential radial surface (23a) has a conical shape.
20. The filter element according to any of clauses 15 to 19 wherein the supporting structure (20) comprises a first circumferential radial wall (22) circumscribing said longitudinal axis (Z) and a second circumferential radial wall (23) circumscribing said longitudinal axis (Z), and wherein said first circumferential radial wall (22) comprises a first side and a second side opposite the first side, and wherein said first side corresponds to said first circumferential radial surface (22a), and wherein said second circumferential radial wall (23) is slanted with respect to said longitudinal axis (Z), and wherein a surface side of said second circumferential radial wall (23) corresponds to said second circumferential radial surface (23a).
21. The filter element according to any of clauses 12 to 14 or clause 20 wherein at least a portion of the first circumferential radial wall (22) of the supporting structure (20) is forming a tube-shaped element elongating along the longitudinal axis (Z) and configured for evacuating filtered fluid from the filter medium pack.
22. The filter element according to any of clauses 12 to 14 or clause 20 wherein at least a portion of the first circumferential radial wall (22) of the supporting structure (20) has a cylindrical shape.
23. The filter element according to any of clauses 12 to 14 or clause 20 wherein the supporting structure (20) is forming an open end cap attached to said second axial end (11) of the filter medium pack, preferably said first circumferential radial wall (22) corresponds to a radial wall of the open end cap.
24. The filter element according to clause 23 wherein the first radial circumferential radial wall (22) comprises a flange member (21) attached to said second axial end (11) of the filter medium pack for forming said open end cap at the second axial end of the filter medium pack.
25. The filter element according to any of clauses 12 to 14 or clause 20 wherein the supporting structure (20) comprises a flange member (21) attached to the second axial end (12) of the filter medium pack and configured for forming an open end cap at the second axial end (12) of the filter medium pack, preferably the flange member (21) is coupled to an axial end of the first circumferential radial wall (22).
26. The filter element according to any of previous clauses wherein the filter medium pack (10) has an inner cavity (17) extending between the first axial end (11) and the second axial end (12) of the filter medium pack (10) and wherein the filter element comprises a closed end cap (25) attached to said first axial end (11).
27. The filter element according to any of previous clauses wherein the filter medium pack comprises pleated filter media or fluted filter media.
28. The filter element according to any of previous clauses wherein the seal is made of or at least partly made of any of the following list of materials or a mixture or combination thereof: rubber, thermoplastic elastomer, thermoset elastomer, silicone, thermoplastic vulcanizate or polyurethane.
29. The filter element according to any of previous clauses wherein the supporting structure (20) and/or the coupling arrangement (40a, 40b, 40c, 40d) is made of or at least partly made of a thermoplastic material, preferably, wherein the thermoplastic material is any of the following materials or mixtures and combinations thereof: acrylonitrile butadiene styrene, polypropylene, polyamide, polyethylene terephthalate, polylactic acid, polyethylene, polycarbonate, polystyrene, or polyvinyl chloride.
30. The filter element according to any of previous clauses wherein the supporting structure (20) forms a single body, preferably manufactured by an injection molding manufacturing process.
31. The filter element according to any of previous clauses wherein the supporting structure (20) and the seal (30) form a single body manufactured by a multi-component injection molding manufacturing process.
32. The filter element according to any of previous clauses wherein the supporting structure (20), the seal (30) and the coupling arrangement of the filter element form a single body manufactured by a multi-component injection molding manufacturing process.
33. The filter element according to any of previous clauses wherein the portion (PS2) of the second segment (S2) that is axially separated from the first segment (S1) is parallel with at least a portion (PS1) of the first segment (S1).
34. The filter element according to any of previous clauses wherein the second segment (S2) of the seal (30) comprises a central segment portion (S2-c) and two transition segment portions (S2-t1, S2-t2) adjoining the central segment portion (S2-c), and wherein the central segment portion (S2-c) of the second segment (S2) is oriented parallel with respect to the first segment (S1), and wherein at least parts of the two transition segment portions (S2-t1, S2-t2) are oriented at an oblique angle with respect to the first segment (S1).
35. The filter element according to any of previous clauses wherein the seal (30) comprises a plurality of said first segments (S1) and a plurality of said second segments (S2), and wherein each of the first segments is alternating with one of the second segments.
36. The filter element according to any of previous clauses wherein the seal comprises at least one circumferential seal lip (30a, 30b,30c).
37. The filter element according to clause 36 wherein said circumferential seal lip (30a, 30b,30c) is disposed at an oblique angle with respect to said first circumferential radial wall (22).
38. The filter element according to clause 36 or clause 37 wherein the seal comprises two or more circumferential seal lips (30a, 30b,30c) disposed in a spaced, parallel relationship.
39. The filter element according to any of previous clauses wherein said portion (PS2) of the second segment (S2) that is axially separated from the first segment (S1) is axially separated by a non-zero axial separation distance (ΔD, ΔD1, ΔD2) measured along said longitudinal axis (Z).
40. The filter element according to any of previous clauses wherein a maximum separation distance (ΔDmax) between the first segment (S1) and the second segment (S2) measured along the longitudinal axis (Z) is between 5 mm and 200 mm, more preferably between 5 mm and 100 mm.
41. The filter element according to any of previous clauses wherein a height (H) of the seal (30) measured along the longitudinal axis (Z) is smaller than a maximum separation distance (ΔDmax) between the first segment (S1) and the second segment (S2) measured along the longitudinal axis (Z).
42. The filter element according to any of previous clauses wherein said coupling arrangement of the filter element is a bayonet coupling arrangement.
43. The filter element according to any of previous clauses wherein the supporting structure (20) is sealingly coupled to the filter medium pack (10).
44. The filter element according to any of previous clauses wherein said seal (30) is sealingly coupled to said second circumferential radial surface (22b, 23a).
45. A filter assembly comprising:
   - a filter element (1) according to any of previous claims, and
   - a housing (100) enclosing said filter element, and wherein the housing comprises
      i) a tubular frame structure (150) located inside the housing (100) and having a first circumferential wall, and wherein a coupling arrangement (110) that is complementary to the coupling arrangement (40a, 40b, 40c, 40d) of the filter element (1) is disposed to the first circumferential wall of the tubular frame structure (150),
      ii) a second circumferential wall forming a sealing surface (130) configured for receiving the seal (30) of the filter element.
46. A filter assembly comprising:
   - a main filter element,
   - a safety filter element for backing up a failure of said main filter element, and wherein said safety filter element is a filter element (1) according to any of clauses 1 to 44, and
   - a housing (100) enclosing the main filter element and the safety filter element, and wherein the housing comprises:
      i) a tubular frame structure (150) located inside the housing (100) having a circumferential wall, and wherein a coupling arrangement (110) that is complementary to the coupling arrangement (40a, 40b, 40c, 40d) of the filter element (1) is disposed to the circumferential wall of the tubular frame structure (150),
      ii) a second circumferential wall forming a sealing surface (130) configured for receiving the seal (30) of the filter element.
47. A filter assembly according to clause 45 or clause 46 wherein the coupling arrangement of the filter element and the complementary coupling arrangement of the housing are configured for forming a bayonet closure.

**REFERENCE NUMBERS**

| | |
|---|---|
| 1 | Filter element |
| 10 | Filter medium pack |
| 11 | First axial end of filter medium pack |
| 12 | Second axial end of filter medium pack |
| 15 | Circumferential radial side of filter medium pack |
| 17 | Inner cavity |
| 20 | Seal supporting structure |
| 21 | Flange member |
| 22 | First Circumferential radial wall of the seal supporting structure |
| 22a | First circumferential radial surface |
| 22b, 23a | Second circumferential radial surface |
| 23 | Second circumferential radial wall of the seal supporting structure |
| 24 | wing member |
| 25 | Closed end cap |
| 30 | seal |
| 30a, 30b,30c | Circumferential seal lip |
| 40a,40b,40c,40d | pin |
| 100 | Housing |
| 110 | slot |
| 120 | Rib |
| 130 | Sealing surface of housing |
| 150 | Tubular frame structure of housing |

## Claims

1. A filter element (1) for insertion into a housing of a filter system comprising:
• a filter medium pack (10) for filtering a fluid, comprising a circumferential radial side (15) elongating along a longitudinal axis (Z) from a first axial end (11) to a second axial end (12) opposite the first axial end,
• a seal (30) for avoiding the fluid from bypassing the filter medium pack when the filter element is installed in the filter system,
• a supporting structure (20) for supporting the seal (30),
**characterized in that** the seal (30) comprises at least a first segment (S1) and a second segment (S2) adjoining the first segment (S1), and wherein at least a portion (PS2) of said second segment (S2) is axially separated from said first segment (S1),
**and in that** the filter element (1) comprises:
• a coupling arrangement for engaging with a complementary coupling arrangement located inside the housing of the filter system,
**and in that** the supporting structure (20) comprises a first circumferential radial surface (22a) circumscribing said longitudinal axis (Z) and a second circumferential radial surface (22b, 23a) circumscribing said longitudinal axis (Z), and wherein the coupling arrangement of the filter element is disposed on said first circumferential radial surface (22a) and wherein the seal (30) is disposed on said second circumferential radial surface (22b, 23a).

2. The filter element according to claim 1 wherein the coupling arrangement of the filter element comprises one or more protrusions (40a, 40b, 40c, 40d) for engaging with protrusion receiving elements of the complementary coupling arrangement of the housing of the filter system, preferably wherein a protrusion of said one or more protrusions (40a, 40b, 40c, 40d) is any of: a pin, a knob, a rib, an emboss, a pivot, a nipple or a combination thereof, or alternatively, wherein the coupling arrangement of the filter element comprises one or more protrusion receiving elements (50) for engaging with protrusions of the complementary coupling arrangement of the housing of the filter system, preferably wherein said one or more protrusion receiving elements is any of: a slot (50), a groove or a combination thereof.

3. The filter element according to claim 2 wherein said one or more protrusions are radially protruding from said first circumferential radial surface (22a).

4. The filter element according to any of previous claims wherein said first circumferential radial surface (22a) is parallel with said second circumferential radial surface (22b), preferably wherein said first circumferential radial surface (22a) and/or said second circumferential radial surface (22b) are parallel with said longitudinal axis (Z).

5. The filter element according to any of previous claims wherein the supporting structure (20) comprises a first circumferential radial wall (22) circumscribing said longitudinal axis (Z) and wherein said first circumferential radial wall (22) comprises an inner side and an outer side opposite the inner side, and wherein the inner side corresponds to said first circumferential radial surface (22a) and the outer side corresponds to said second circumferential radial surface (22b), or alternatively wherein the inner side corresponds to said second circumferential radial surface (22b) and the outer side corresponds to said first circumferential radial surface (22a).

6. The filter element according to any of claims 1 to 3 wherein said first circumferential radial surface (22a) is parallel with said longitudinal axis (Z) and said second circumferential radial surface (23a) is slanted with respect to said longitudinal axis (Z).

7. The filter element according to claim 6 wherein said second circumferential radial surface (23a) is slanted by an angle θ, with 5° ≤ θ ≤ 85°, preferably with 20° ≤ θ ≤ 60°, more preferably with 30° ≤ θ ≤ 50°.

8. The filter element according to claim 6 or claim 7 wherein the supporting structure (20) comprises a first circumferential radial wall (22) circumscribing said longitudinal axis (Z) and a second circumferential radial wall (23) circumscribing said longitudinal axis (Z), and wherein said first circumferential radial wall (22) comprises a first side and a second side opposite the first side, and wherein said first side corresponds to said first circumferential radial surface (22a), and wherein said second circumferential radial wall (23) is slanted with respect to said longitudinal axis (Z), and wherein a surface side of said second circumferential radial wall (23) corresponds to said second circumferential radial surface (23a).

9. The filter element according to claim 5 or claim 8 wherein at least a portion of the first circumferential radial wall (22) of the supporting structure (20) is forming a tube-shaped element elongating along the longitudinal axis (Z) and configured for evacuating filtered fluid from the filter medium pack.

10. The filter element according to claim 5 or claim 8 wherein the supporting structure (20) comprises a flange member (21) attached to the second axial end (12) of the filter medium pack and configured for forming an open end cap at the second axial end (12) of the filter medium pack, preferably the flange member (21) is coupled to an axial end of the first circumferential radial wall (22).

11. The filter element according to any of previous claims wherein the filter medium pack (10) has an inner cavity (17) extending between the first axial end (11) and the second axial end (12) of the filter medium pack (10) and wherein the filter element comprises a closed end cap (25) attached to said first axial end (11).

12. The filter element according to any of previous claims wherein the supporting structure (20) forms a single body manufactured by an injection molding manufacturing process, preferably wherein the supporting structure (20) and the seal (30) form a single body manufactured by a multi-component injection molding manufacturing process, more preferably wherein the supporting structure (20), the seal (30) and the coupling arrangement of the filter element form a single body manufactured by a multi-component injection molding manufacturing process.

13. The filter element according to any of previous claims wherein the second segment (S2) of the seal (30) comprises a central segment portion (S2-c) and two transition segment portions (S2-t1, S2-t2) adjoining the central segment portion (S2-c), and wherein the central segment portion (S2-c) of the second segment (S2) is oriented parallel with respect to the first segment (S1), and wherein at least parts of the two transition segment portions (S2-t1, S2-t2) are oriented at an oblique angle with respect to the first segment (S1).

14. The filter element according to any of previous claims wherein the seal comprises at least one circumferential seal lip (30a, 30b,30c).

15. A filter assembly comprising:
• a filter element (1) according to any of previous claims, and
• a housing (100) enclosing said filter element, and wherein the housing comprises
i) a tubular frame structure (150) located inside the housing (100) and having a first circumferential wall, and wherein a coupling arrangement (110) that is complementary to the coupling arrangement (40a, 40b, 40c, 40d) of the filter element (1) is disposed to the first circumferential wall of the tubular frame structure (150),
ii) a second circumferential wall forming a sealing surface (130) configured for receiving the seal (30) of the filter element.
